# EUROPEAN PATENT SPECIFICATION

(11) **EP 3 037 283 B1**
(45) Date of publication and mention of the grant of the patent: **24.04.2019**
(21) Application number: 15200567.4
(22) Date of filing: 16.12.2015
(51) Int. Cl.: B60C 13/00

(54) **AIRCRAFT TIRE WITH CONCAVE SIDEWALL**
FLUGZEUGREIFEN MIT KONKAVER SEITENWAND
PNEU D'AÉRONEF AVEC PAROI LATÉRALE CONCAVE

(30) Priority: 22.12.2014 US 201414579128
(43) Date of publication of application: 29.06.2016
(73) Proprietor: The Goodyear Tire & Rubber Company, Akron, Ohio 44316 (US)
(72) Inventor: UEYOKO, Kiyoshi, Copley, OH 44321 (US)
(74) Representative: Kutsch, Bernd

(56) References cited:
- EP-A1- 0 491 575
- EP-A2- 1 093 940
- EP-A2- 1 110 762
- JP-A- S6 322 705
- US-A- 3 835 907

## Description

### Field of the Invention

This invention relates to pneumatic tires having a carcass and preferably also a belt reinforcing structure, and more particularly to high speed heavy load tires such as those used on aircraft.

### Background of the Invention

The radial carcass reinforcements of aircraft tires generally comprise several plies of textile cords, which are anchored to at least one annular bead member. A first group of reinforcing plies are generally wound around said annular bead member from the inside to the outside, forming turn-ups, the respective ends of which are radially spaced from the axis of rotation of the tire. The second group of plies are generally wound around the annular bead member from the outside to the inside of the tire.

Aircraft tires typically use numerous layers of ply which can significantly contribute to the tire weight. The numerous layers of ply may result in bead durability issues. It is thus desired to provide a lightweight efficient tire structure having improved bead durability. It is a further desired to provide an improved bead structure wherein the use of inside turn-up plies and outside turndown plies and their respective locations are optimized. Thus an improved aircraft tire is needed, which is capable of meeting high speed, high load and with reduced weight.

EP-A-1 110 762 describes a pneumatic tire in accordance with the preamble of claim 1. Similar tires are also described in JP-H63-22705, US-A-3,835,907 and EP-A-1 093 940.

EP-A-0 491 575 describes a pneumatic tire having a lower sidewall portion including a first concave portion and a second concave portion. An apex is not explicitly disclosed there.

### Summary of the Invention

The invention relates to a tire in accordance with claim 1.

Dependent claims refer to preferred embodiments of the invention.

A pneumatic tire in accordance with a preferred aspect of the present invention includes two annular bead portions, a carcass, and a belt reinforcement layer. The pneumatic tire further includes sidewalls, wherein each sidewall has an upper sidewall portion and a lower sidewall portion separated by the maximum width, wherein the lower sidewall portion further includes a first concave portion located between a radially outward end of the apex and the point of maximum width. The pneumatic tire may additionally comprise a second concave portion located in the upper sidewall.

### Definitions

"100 percent Modulus" means the force in MegaPascals (MPa) required to produce 100 percent elongation (e.g., stretch to two times original length).

"300 percent Modulus" or "M300 modulus" means the force in MegaPascals (MPa) required to produce 300 percent elongation (e.g., stretch to four times original length).

"Apex" means an elastomeric filler located radially above the bead core and between the plies and the turnup ply or axially outside the turnup ply.

"Annular" means formed like a ring.

"Axial" and "axially" are used herein to refer to lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt structure" means one or at least two annular layers or plies of parallel cords, woven or unwoven, underlying the tread, unanchored to the bead, and having cords inclined respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads.

"Chafer" refers to a narrow strip of material placed around the exterior of the bead to protect bead structures from the rim, distribute flexing radially above the rim, and to better seal the tire to the rim.

"Chipper" refers to a narrow band of fabric or steel cords located in the bead area whose function is to reinforce the bead area and stabilize the radially inwardmost part of the sidewall.

"Circumferential" means lines or directions extending along the perimeter of the surface of the annular tire parallel to the Equatorial Plane (EP) and perpendicular to the axial direction; it can also refer to the direction of the sets of adjacent circular curves whose radii define the axial curvature of the tread, as viewed in cross section.

"Cord" means one of the reinforcement strands which the reinforcement structures of the tire comprise.

"Cord angle" means the acute angle, left or right in a plan view of the tire, formed by a cord with respect to the equatorial plane. The "cord angle" is measured in a cured but uninflated tire.

"Crown" means that portion of the tire within the width limits of the tire tread.

"Denier" means the weight in grams per 9000 meters (unit for expressing linear density). Dtex means the weight in grams per 10,000 meters.

"Density" means weight per unit length.

"Equatorial plane (EP)" means the plane perpendicular to the tire's axis of rotation and passing through the center of its tread; or the plane containing the circumferential centerline of the tread.

"Fabric" means a network of essentially unidirectionally extending cords, which may be twisted, and which in turn are composed of a plurality of a multiplicity of filaments (which may also be twisted) of a high modulus material.

"Fiber" is a unit of matter, either natural or man-made that forms the basic element of filaments. Characterized by having a length at least 100 times its diameter or width.

"Filament count" means the number of filaments that make up a yarn. Example: 1000 denier polyester has approximately 190 filaments.

"Flipper" refers to a reinforcing fabric around the bead wire for strength and to tie the bead wire in the tire body.

"Gauge" refers generally to a measurement, and specifically to a thickness measurement.

"Inner" means toward the inside of the tire and "outer" means toward its exterior.

"Innerliner" means the layer or layers of elastomer or other material that form the inside surface of a tubeless tire and that contain the inflating fluid within the tire.

"Lateral" means an axial direction.

"Load Range" means load and inflation limits for a given tire used in a specific type of service as defined by tables in The Tire and Rim Association, Inc.

"Normal Load" means the specific design inflation pressure and load assigned by the appropriate standards organization for the service condition for the tire.

"Ply" means a cord-reinforced layer of rubber-coated radially deployed or otherwise parallel cords.

"Radial" and "radially" are used to mean directions radially toward or away from the axis of rotation of the tire.

"Radial Ply Structure" means the one or more carcass plies or which at least one ply has reinforcing cords oriented at an angle of between 65° and 90° with respect to the equatorial plane of the tire.

"Radial Ply Tire" means a belted or circumferentially-restricted pneumatic tire in which at least one ply has cords which extend from bead to bead are laid at cord angles between 65° and 90° with respect to the equatorial plane of the tire.

"Sidewall" means that portion of a tire between the tread and the bead.

"Tread" means a molded rubber component which, when bonded to a tire casing, includes that portion of the tire that comes into contact with the road when the tire is normally inflated and under normal load.

"Tread width" means the arc length of the tread surface in a plane including the axis of rotation of the tire.

"Turnup end" means the portion of a carcass ply that turns upward (i.e., radially outward) from the beads about which the ply is wrapped.

### Brief Description of the Drawings

The present invention will be described by way of example and with reference to the accompanying drawing, in which:
Figure 1 is an example schematic partial cross-sectional view of one half of a tire construction in accordance with the present invention.
Figure 2 is an example schematic partial cross-sectional view of a bead structure in accordance with the present invention.

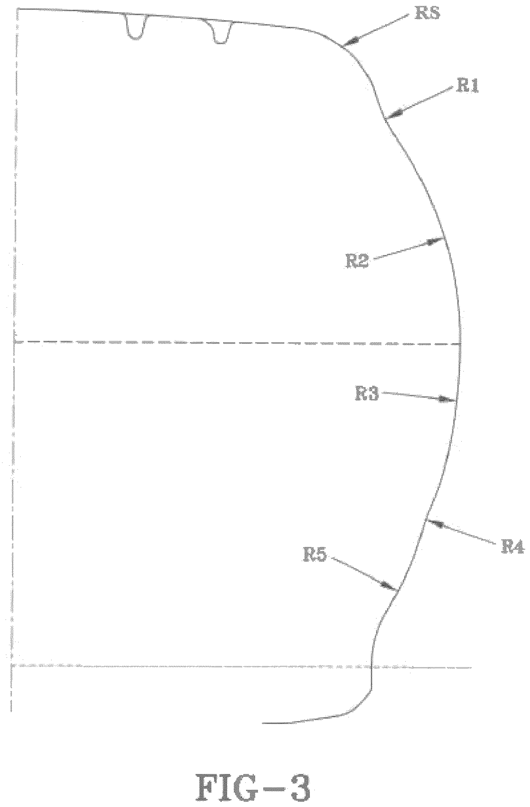

Figure 3 is an example schematic showing the sidewall and bead area contours.

### Detailed Description of an Example Embodiment of the Present Invention

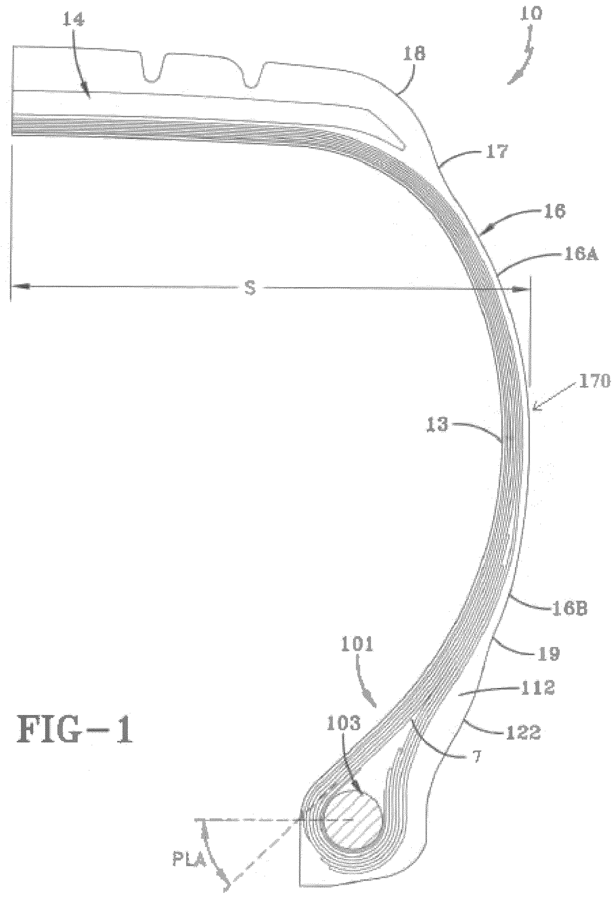

Figure 1 illustrates a cross-sectional view of one half of a radial aircraft tire 10 of the present invention. The tire 10 is preferably symmetrical about the mid-circumferential plane so that only one half is illustrated. In the example shown, the tire 10 is an aircraft tire, preferably a radial aircraft tire. The tire 10 comprises a pair of bead portions 101 each containing an annular bead member or bead core 103 embedded therein. One example of an annular bead member suitable for use in an aircraft tire is shown in US-B-6,571,847. The annular bead core 103 preferably has an aluminum, aluminum alloy or other light weight alloy in the center portion surrounded by a plurality of steel sheath wires. A person skilled in the art may appreciate that other annular bead members may also be utilized.

The tire 10 further comprises two sidewalls 16 extending substantially outward from each of the bead portions 101 in the radial direction of the tire, and a tread 14 extending between the radially outer ends of the sidewalls 16. At the outer axial edges of the tread, a shoulder 18 joins together the sidewall 16 and the tread 14. The shoulder 18 has a radius R_{S}.

The sidewall 16 has an upper sidewall portion 16a and a lower sidewall portion 16b. The upper sidewall portion 16a is separated from the lower sidewall portion 16b by point 170 of maximum axial width S of the tire 10.

Preferably, the upper sidewall portion 16a has a concave section 17 located near the shoulder area 18. More preferably, the concave section 17 is positioned between the shoulder 18 and the upper sidewall portion 16a.

The concave section 17 has a radius R₁ in a range of from 7.5 cm to 12.5 cm (3 to 5 inches). The center point (origin) of the circle having this radius is located outside of the tire 10.

The concave section 17 may extend radially outward into the tread shoulder 18.

Preferably, the concave section 17 is located at the intersection of the tread 14 and the upper sidewall 16a.

The upper sidewall portion 16a has a radius R₂ radially inward of the concave section 17. Preferably, R₂ is greater than R₁. More preferably, R₂ is two times or at least two times greater than R₁

In the portion of the upper sidewall portion 16a, the upper sidewall portion 16a has a convex shape. Preferably, R₂ is greater than R₁. More preferably, R₂ is two times or at least two times greater than R₁

The lower sidewall portion 16b has a concave section 19. The concave section 19 is located radially outward of the radially outer end 7 of the bead apex 11 and radially inward of the point 170 of maximum width S of the tire 10.

The concave section 19 has a radius R₄ in the range of from 5 cm to 15 cm (2 to 6 inches), preferably 5 cm to 10 cm (2-4 inches). The center point (origin) of the circle having this radius is located outside of the tire 10.

The lower sidewall portion 16b has a radius R₅ radially inward of the concave section 19 and a radius R₃ radially outward of the concave section 19.

Preferably, R₃ is greater than R₅. More preferably, R₃ is two times or at least two times greater than R₅.

The radius R₂ and the radius R₃ may be same or within the range 0.6*R₂ < R₃ < 1.4*R₃ or within the range 0.8*R₂ < R₃ < 1.2*R₃. Preferably, R₃ is greater than R₂.

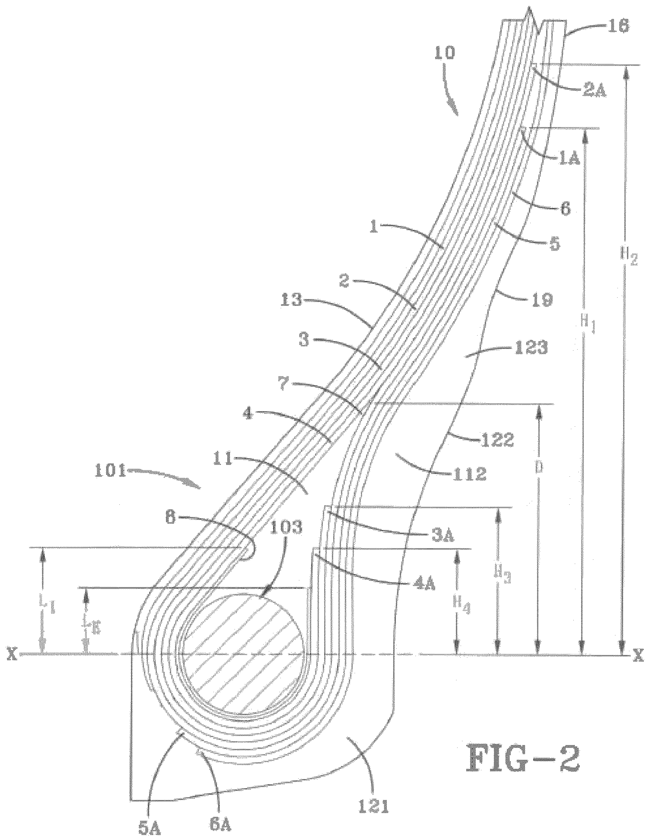

The tire 10 is preferably reinforced with a carcass toroidally extending from one of the bead portions 101 to the other bead portion 101. An air impervious inner liner 13 is located on the inner surface of the carcass 10. Figure 2 schematically shows a partial cross section of an example tire bead structure 101 of a pneumatic tire in accordance with the present invention. The example tire shown is that of a standard size tire 50x20R22 with a load rating of 57,100 pounds (25900 kg) and a pressure rating of 220 psi (1516847 Pa). The tire in accordance with the invention has an excellent durability and shows a reduced chafing at the rim.

A carcass reinforcement may be formed of four axially inner plies 1, 2, 3, 4 and two axially outer plies 5, 6. The cross section of the bead core 103 is radially surmounted by a filler or first apex 11 of elastomeric mix having substantially the shape of a triangle in cross-section, the terminal end 7 of which extends radially from the axis of rotation of the tire a distance D from a reference line XX extending axially through the center of the bead wire 103.

Preferably, three of the axially inner carcass plies 1, 2, 3 extend down from the tread and are positioned axially inward and are wrapped around the bead core 103, forming turn-ups 1A, 2A, 3A, respectively. The axially innermost carcass plies 1, 2 may have their respective turnup ends 1A, 2A spaced radially from the line XX by the amount H1, H₂, which, for example, may range from 1.5 to 3 times the apex height or distance D. Further, for example, the turnup ends 3A, 4A of the inner plies 3 and 4 may also be located radially below the terminal end 7 of the first apex 11 at distances H3 and H4 respectively. Preferably, turnup ends 1A, 2A are preferably located radially outward of the apex tip 7, and preferably higher than the chafer ending 123 of a chafer 122. Preferably, the axially innermost ply 1 has the axially outermost turnup end 1A.

Preferably, there is at least one carcass outer down ply 5 that encases the turn-ups 1A, 2A, 3A, 4A of the inner carcass plies 1, 2, 3, 4. The axially outer down ply 5 may, for example, be partially wound around the bead wire 103 over a portion or circular arc corresponding to an angle at the center of the circle circumscribed on the bead wire 103 equal to 180° or less so that the ends 5A of the outer ply 5 is situated radially inward of the reference line XX. Ply 6 as shown in Figure 1 is optional. The carcass plies 1-6 may comprise reinforcements that make an angle between 70-90 degrees with respect with respect to the equatorial plane.

The angle of the inner plies is measured by the angle shown in Fig. 1 designated as PLA. The angle PLA is the angle between the axial direction (line X-X) and the axially outermost ply 4 of the axially inner plies 1-4, or the ply closest to the bead core. Preferably, PLA ranges from 40-55 as measured on a new tire that is not mounted on a rim and is not inflated.

A flipper 8 may separate the bead wire 103 from the carcass reinforcement and be formed of radial textile cords preferably identical to the carcass ply cords (or different cords). One terminal end of the flipper 8 may, for example, may extend a radial distance LI of 18mm from the line XX. The other terminal end of the flipper 8 may extend a radial distance L_{E} from the line XX equal to 10mm.

The tire bead 103 may be supplemented by a reinforcement ply or outer first chafer 121 reinforced with radial textile cords. The rubber chafer 121 permit a better distribution of the pressures between the tire and its service rim, as well as assuring protection of the carcass plies against injury upon mounting.

The axially outer end of the first chafer 121 may be slightly above (about 20 mm) the reference line XX, while its axially inner end may be below the line XX.

An example tire with a bead structure as shown in Figure 1 includes two annular bead portions/structures 101, a carcass extending between the bead portions through two sidewall portions, and a tread portion (not shown). The carcass has at least one carcass ply 1 of parallel cords turned up about the bead portions 101, and a belt reinforcement layer (not shown) disposed radially outside the carcass and radially inside the tread portion. Each annular bead portion 101 includes an annular bead core 103 having the carcass ply or plies 1-4 turned up around the bead core, a first apex 11 disposed adjacent and radially outward of the bead core, a second apex 112 disposed axially outward of the bead core 103 and the carcass ply or plies, a first chafer 121 disposed adjacent the carcass ply or plies and axially outward of the bead core 103, and a second chafer 122 disposed adjacent and axially outward of the second apex.

The first apex 11 is preferably constructed of a material with a 300 percent modulus between 18-25 MPa.

The second apex 112 is preferably constructed of a material with a 300 percent modulus between 14-18 MPa.

The first chafer 121 is preferably of a material with a 300 percent modulus between 17-21 MPa.

The second chafer 122 is preferably a material with a 300 percent modulus between 7-9 MPa.

The axially outer end of the second chafer 122 is preferably 60 mm or in a range of from 50 mm to 70 mm above the line XX.

The axially outer end of the second chafer 122 preferably covers the contact area between the tire 10 and the wheel flange under a 200% rated loading condition.

The sidewall portions 16, 16a, 16b are preferably constructed of a material with a 300 percent modulus between 3 MPa and 8 MPa.

As stated above, a bead structure 101 and the tire 10 in accordance with the present invention produces excellent durability and reduced chafing at the rim.

## Claims

1. A pneumatic tire comprising two sidewalls (16), two annular bead portions (101) each having a bead core (103), a carcass extending between the bead portions (101) through the respective sidewall (16) of the tire (10), and a tread (14), wherein each sidewall (16) has an upper sidewall portion (16A) and a lower sidewall (16B) which are separated by a point (170) of maximum axial width (S) of the tire (10), wherein the lower sidewall portion (16B) includes a first concave portion (19) located between a radially outward end (7) of a bead apex (11) and the point (170) of maximum width (S) of the tire (10), when measured on an unmounted, uninflated tire in a new condition,
**characterized in that** the first concave portion (19) has a radius (R₄) in a range of from 5 cm to 15 cm; and wherein the tire (10) has a second concave portion (17) located in the upper sidewall portion (16A) of the tire (10), the second concave portion (17) having a radius (R₁) in a range of from 7.5 cm to 12.5 cm.

2. The pneumatic tire of claim 1 wherein the tire (10) comprises a second apex (112) located axially outward of the bead apex (11), the second apex (112) having a radially outer end, and wherein the first concave portion (19) is located adjacent to the radially outer end of the second apex (112).

3. The pneumatic tire of at least one of the previous claims 1 or 2 wherein the second concave (17) portion is located where the tread (14) intersects the upper sidewall portion (16A).

4. The pneumatic tire of at least one of the previous claims wherein the tire (10) further comprises a belt structure and wherein the second concave portion (17) is located axially outward of the belt structure.

5. The pneumatic tire of at least one of the previous claims wherein the first concave portion (19) and the second concave portion (17) is separated by a convex portion.

6. The pneumatic tire of at least one of the previous claims wherein first concave portion (19) has a first radius (R₄) and wherein the radius (R₁) of the second concave portion (17) is greater than the first radius (R₄).

7. The pneumatic tire of at least one of the previous claims wherein the carcass includes at least two plies (1, 2, 3, 4) which extend down from the tread (14) and around the bead core (103) forming at least one turnup (1A, 2A, 3A, 4A), preferably at least two turnups (1A, 2A, 3A, 4A) or a number of turnups corresponding to the number of said plies (1, 2, 3, 4).

8. The pneumatic tire of at least one of the previous claims wherein the tire (10) is an aircraft tire, preferably a radial aircraft tire.

## Patentansprüche

1. Luftreifen, umfassend zwei Seitenwände (16), zwei ringförmige Wulstbereiche (101), die jeder einen Wulstkern (103) aufweisen, eine sich zwischen den Wulstbereichen (101) durch die jeweilige Seitenwand (16) des Reifens (10) erstreckende Karkasse, und eine Lauffläche (14), wobei jede Seitenwand (16) einen oberen Seitenwandbereich (16A) und eine untere Seitenwand (16B) aufweist, die durch einen Punkt (170) größter axialer Breite (S) des Reifens (10) getrennt sind, wobei der untere Seitenwandbereich (16B) einen ersten konkaven Abschnitt (19) beinhaltet, der sich zwischen einem radial auswärts befindlichen Ende (7) eines Wulstkernprofils (11) und dem Punkt (170) größter Breite (S) des Reifens (10) befindet, gemessen an einem nicht montierten, nicht befüllten Reifen in einem Neuzustand,
**dadurch gekennzeichnet, dass** der erste konkave Abschnitt (19) einen Radius (R₄) im Bereich von 5 cm bis 15 cm aufweist; und wobei der Reifen (10) einen zweiten konkaven Abschnitt (17) aufweist, der sich in dem oberen Seitenwandbereich (16A) des Reifens (10) befindet, wobei der zweite konkave Abschnitt (17) einen Radius (R₁) im Bereich von 7,5 cm bis 12,5 cm aufweist.

2. Luftreifen nach Anspruch 1, wobei der Reifen (10) ein zweites Kernprofil (112) umfasst, das sich axial auswärts von dem Wulstkernprofil (11) befindet, wobei das zweite Kernprofil (112) ein radial äußeres Ende aufweist, und wobei sich der erste konkave Abschnitt (19) benachbart zu dem radial äußeren Ende des zweiten Kernprofils (112) befindet.

3. Luftreifen nach mindestens einem der vorhergehenden Ansprüche 1 oder 2, wobei sich der zweite konkave Abschnitt (17) dort befindet, wo die Lauffläche (14) den oberen Seitenwandbereich (16A) kreuzt.

4. Luftreifen nach mindestens einem der vorhergehenden Ansprüche, wobei der Reifen (10) weiter eine Gürtelstruktur umfasst und wobei sich der zweite konkave Abschnitt (17) axial auswärts von der Gürtelstruktur befindet.

5. Luftreifen nach mindestens einem der vorhergehenden Ansprüche, wobei der erste konkave Abschnitt (19) und der zweite konkave Abschnitt (17) durch einen konvexen Abschnitt getrennt sind.

6. Luftreifen nach mindestens einem der vorhergehenden Ansprüche, wobei der erste konkave Abschnitt (19) einen ersten Radius (R₄) aufweist und wobei der Radius (R₁) des zweiten konkaven Abschnitts (17) größer als der erste Radius (R₄) ist.

7. Luftreifen nach mindestens einem der vorhergehenden Ansprüche, wobei die Karkasse mindestens zwei Lagen (1, 2, 3, 4) umfasst, die sich von der Lauffläche (14) nach unten und um den Wulstkern (103) erstrecken, wobei sie mindestens einen Lagenumschlag (1A, 2A, 3A, 4A) bilden, bevorzugt mindestens zwei Lagenumschläge (1A, 2A, 3A, 4A) oder eine der Anzahl der Lagen (1, 2, 3, 4) entsprechende Anzahl von Lagenumschlägen.

8. Luftreifen nach mindestens einem der vorhergehenden Ansprüche, wobei der Reifen (10) ein Luftfahrzeugreifen ist, bevorzugt ein Luftfahrzeug-Radialreifen.

## Revendications

1. Bandage pneumatique comprenant deux flancs (16), deux portions annulaires (101) faisant office de talons, chacune possédant une tringle de talon (103), une carcasse s'étendant entre les portions (101) faisant office de talons en passant par le flanc respectif (16) du bandage pneumatique (10), et une bande de roulement (14) ; dans lequel chaque flanc (16) possède une portion de flanc supérieure (16A) et une portion de flanc inférieure (16B) qui sont séparées par un point (170) correspondant à la largeur axiale maximale (S) du bandage pneumatique (10) ; dans lequel la portion de flanc inférieure (16B) englobe une première portion concave (19) située entre une extrémité externe en direction radiale (7) d'un bourrage sur tringle (11) et le point (170) correspondant à la largeur axiale maximale (S) du bandage pneumatique (10), lorsqu'on procède à la mesure sur un bandage pneumatique non monté et non gonflé, à l'état neuf ;
**caractérisé en ce que** la première portion concave (19) possède un rayon (R₄) dans une plage de 5 cm à 15 cm ; et dans lequel le bandage pneumatique (10) possède une deuxième portion concave (17) située dans la portion de flanc supérieure (16A) du bandage pneumatique (10), la deuxième portion concave (17) possédant un rayon (R₁) dans une plage de 7,5 cm à 12,5 cm.

2. Bandage pneumatique selon la revendication 1, dans lequel le bandage pneumatique (10) comprend un deuxième bourrage sur tringle (112) disposé à l'extérieur en direction axiale de la tringle de talon (11), le deuxième bourrage sur tringle (112) possédant une extrémité externe en direction radiale ; et dans lequel la première portion concave (19) est disposée en position adjacente à l'extrémité externe en direction radiale du deuxième bourrage sur tringle (112).

3. Bandage pneumatique selon au moins une des revendications précédentes 1 ou 2, dans lequel la deuxième portion concave (17) est disposée à l'endroit où la bande de roulement (14) coupe la portion de flanc supérieure (16A).

4. Bandage pneumatique selon au moins une des revendications précédentes, dans lequel le bandage pneumatique (10) comprend également une structure de ceintures ; et dans lequel la deuxième portion concave (17) est disposée à l'extérieur en direction axiale de la structure de ceintures.

5. Bandage pneumatique selon au moins une des revendications précédentes, dans lequel la première portion concave (19) et la deuxième portion concave (17) sont séparées par une portion convexe.

6. Bandage pneumatique selon au moins une des revendications précédentes, dans lequel la première portion concave (19) possède un premier rayon (R₄) ; et dans lequel le rayon (R₁) de la deuxième portion concave (17) est supérieur au premier rayon (R₄).

7. Bandage pneumatique selon au moins une des revendications précédentes, dans lequel la carcasse englobe au moins deux nappes (1, 2, 3, 4) qui s'étendent vers le bas à partir de la bande de roulement (14) et autour de la tringle de talon (103) en formant au moins un retournement vers le haut (1A, 2A, 3A, 4A), de préférence au moins deux retournements vers le haut (1A, 2A, 3A, 4A), ou bien un nombre de retournements vers le haut qui correspond aux nombres desdites nappes (1, 2, 3, 4).

8. Bandage pneumatique selon au moins une des revendications précédentes, dans lequel le bandage pneumatique (10) est un bandage pneumatique destiné à un aéroplane, de préférence un bandage pneumatique pour aéroplane du type à nappe radiale.
